# EUROPÄISCHE PATENTSCHRIFT

(11) **EP 1 298 330 B1**
(45) Veröffentlichungstag und Bekanntmachung des Hinweises auf die Patenterteilung: **07.12.2005**
(21) Anmeldenummer: 02405436.3
(22) Anmeldetag: 31.05.2002
(51) Int. Cl.: F16B 13/00, E04F 13/08, E04D 3/36

(54) **Befestigungselement zur Befestigung von Dämmstoffplatten**
Element for fixing insulating panels
Elément de fixation de panneaux isolants

(30) Priorität: 25.09.2001 DE 10147154
(43) Veröffentlichungstag der Anmeldung: 02.04.2003
(73) Patentinhaber: HILTI Aktiengesellschaft, 9494 Schaan (LI)
(72) Erfinder: Bisping, Heinz, 86163 Augsburg (DE); Kölbl, Alois, 86807 Buchloe (DE); Wieser, Jürgen, 86916 Kaufering (DE); Zimmerer, Claudia, 86153 Augsburg (DE); Hausner, Wolfgang, 86859 Igling (DE)
(74) Vertreter: Wildi, Roland

(56) Entgegenhaltungen:
- DE-A- 3 606 321
- DE-U- 7 932 608
- DE-U- 8 815 185
- DE-U- 8 905 953

## Beschreibung

Die Erfindung betrifft ein Befestigungselement zur Befestigung von Dämmstoffplatten an einem Untergrund mit einem, durch einen Spreizdorn im Untergrund verspreizbaren, Dübelkörper, der einen Hohlschaft aufweist, an dessen einem Längsende eine Druckplatte und am gegenüberliegenden Längsende eine Spreizhülse vorgesehen ist, wobei der Spreizdorn einen Spreizbereich zum radialen Aufweiten der Spreizhülse und einen, mit dem Hohlschaft zusammenwirkenden, zumindest teilweise mit in Längsrichtung verlaufenden Stegen versehenen, Führungsbereich aufweist. Die Innenkontur des Hohlschafts ist zumindest teilweise komplementär zur Aussenkontur des Führungsbereiches ausgebildet.

Befestigungselemente der oben genannten Art weisen einen, durch einen Spreizdorn in einen Untergrund verankerbaren, Dübelkörper auf. Der Dübelkörper weist einen Hohlschaft auf, der beispielsweise etwa eine Längserstreckung aufweist, die der der Wandstärke einer am Untergrund zu befestigenden Dämmstoffplatte entspricht. Am setzrichtungsseitig gegenüberliegenden Ende ist eine Druckplatte vorgesehen, die zum Anpressen der Dämmstoffplatte an den Untergrund dient. Am gegenüberliegenden Ende des Hohlschaftes ist eine Spreizhülse vorgesehen, die durch Einbringen des Spreizdorns, insbesondere eines Spreizbereiches des Spreizdorns, im Untergrund unter radialem Aufweiten den Dübelkörper im Untergrund verankert.

Aus der DE 199 62 795 C1 ist ein Befestigungselement mit einem Dübelkörper und einem Spreizdorn bekannt. Der Dübelkörper weist einen, im Querschnitt kreisringförmigen, Hohlschaft auf, an dessen setzrichtungsseitigem Ende eine Spreizhülse und am gegenüberliegenden Ende eine Druckplatte vorgesehen ist. Der Spreizdorn weist mehrere, gleichmässig über dessen Umfang verteilte, in Längsrichtung verlaufende Stege auf.

Nachteilig an der bekannten Lösung ist, die geringe Knicksteifigkeit sowohl des Dübelkörpers als auch des Spreizelementes. Ferner wird über den dünn ausgebildeten Spreizdorn ein Teil der Schlagenergie absorbiert. Am Ende des Eintreibvorganges entstehen unter bestimmten Rahmenbedingungen sogenannte Prellschläge, d.h. der Spreizdorn lässt sich nicht vollständig in den Dübelkörper eintreiben. Ursache dieser sogenannten Prellschläge ist beispielsweise Bohrklein in der Spreizhülse, das ein vollständiges Eintreiben des Spreizelementes in den Dübelkörper, insbesondere in die Spreizhülse, verhindert. Zudem ist ein vollständiges und damit korrektes Eintreiben des Spreizdorns in die Spreizhülse des Dübelkörpers nicht mehr möglich. Folgen eines derartig unvollständig gesetzten Befestigungselementes sind ausserdem unzureichende Lastwerte desselben im Untergrund.

Aus der DE 79 32 608 U1 ist ein Befestigungselement zur Befestigung von plattenförmigen Bauteilen an einem Untergrund mit einem, durch einen Spreizdorn im Untergrund verspreizbaren Dübelkörper bekannt. Der Dübelkörper weist einen Hohlschaft auf, an dessen einem Längsende eine Druckplatte und am gegenüberliegenden Längsende eine Spreizhülse vorgesehen ist. Der Spreizdorn weist einen Spreizbereich zum radialen Aufweiten der Spreizhülse und einen mit dem Hohlschaft zusammenwirkenden, zumindest teilweise mit in Längsrichtung vorlaufenden Stegen versehenen Führungsbereich auf. Die Innenkontur des Hohlschafts ist zumindest teilweise komplementär zur Aussenkontur des Führungsbereichs ausgebildet. Der Hohlschaft des Dübelkörpers ist in einem quer zur Längsrichtung verlaufenden Querschnitt kreuzförmig ausgebildet. Die Länge der Spreizhülse ist grösser als die Länge des Spreizbereichs.

Dadurch, dass die Innenkontur des Hohlschaftes zumindest teilweise, vorzugsweise über die gesamte Länge desselben, komplementär zur Aussenkontur des Führungsbereiches des Spreizdorns ausgebildet ist, erfolgt eine Führung des Spreizdorns im Dübelkörper in Umfangsrichtung der beiden Teile. Ferner ist durch die in Längsrichtung verlaufenden Nuten des Hohlschaftes eine hohe Knicksteifigkeit desselben gewährleistet.

Der vorliegenden Erfindung liegt die Aufgabe zugrunde, ein Befestigungselement für Dämmstoffplatten zu schaffen, das sowohl eine hohe Knicksteifigkeit des Dübelkörpers als auch des Spreizelements gewährleistet. Dadurch soll das Befestigungselement auch in einem mit Bohrklein versehenen Bohrloch hohe Lastwerte sicherstellen.

Erfindungsgemäss wird die Aufgabe dadurch gelöst, dass der Spreizbereich am setzrichtungsseitigen Ende ein Kopfelement aufweist, das den unmittelbar an dieses angrenzenden Bereich des übrigen Spreizbereichs radial zumindest teilweise überragt.

Das Kopfelement wirkt als Dichtelement zwischen Dübelkörper und Spreizdorn und verhindert dadurch ein Eindringen von Bohrklein in den setzrichtungsseitig vom Kopfelement abgewandten Teil des Dübelkörpers.

Vorzugsweise weist der Hohlschaft in einem quer zur Längsrichtung verlaufenden Querschnitt eine etwa gleichbleibende Wandstärke auf, um dadurch eine wirtschaftliche Herstellung des Befestigungselements sicherzustellen.

Vorteilhafterweise ist der Hohlschaft in einem quer zur Längsrichtung verlaufenden Querschnitt sternförmig ausgebildet, um eine maximale Knicksteifigkeit des Hohlschaftes sicherzustellen. Durch die sternförmige Ausbildung des Querschnitts des Hohlschaftes ergibt sich ausserdem eine grosse Masse in diesem Bereich, die sich positiv auf die Übertragung der Schlagenergie beim Eintreiben des Spreizdorns in den Dübelkörper auswirkt. Ferner ist die Aussenkontur des Hohlschaftes ähnlich der Aussenkontur des Führungsbereichs des Spreizdorns ausgebildet.

Vorzugsweise ist die Länge der Spreizhülse grösser als die Länge des Spreizbereichs, um einen Aufnahmebereich für ein durch das Erstellen des Bohrloches angefallenes Bohrklein bereitzustellen. Damit ist ein genügend langer Aufnahmebereich in der Spreizhülse des Dübelkörpers für den Spreizbereich des Spreizdorns gewährleistet. Dringt beim Setzvorgang des Befestigungselements ins Bohrloch beispielsweise Bohrklein in die Spreizhülse ein, wird dies beim Eintreibvorgang des Spreizdorns in den Spreizkörper, durch das setzrichtungsseitige Ende des Spreizbereichs durch die Längendifferenz zwischen dem Spreizbereich und der Spreizhülse gebildeten Aufnahmeraum transportiert. Dadurch ist ein vollständiges Eintreiben des Spreizdorns in den Dübelkörper gewährleistet.

Vorteilhafterweise weist das setzrichtungsseitige Ende der Spreizhülse ein geschlossenes Bodenteil auf, um ein Eindringen des Bohrkleins in die Spreizhülse zu vermeiden. Beim Einbringen des Dübelkörpers in das Bohrloch dient der Bodenteil als Abdichtmittel und schiebt das Bohrklein in Setzrichtung vor sich her.

Vorzugsweise ist der Spreizbereich, zumindest über einen Teil seiner Länge, konisch ausgebildet, wobei der Durchmesser des Spreizbereichs im konischen Bereich in Setzrichtung zunimmt, um beim Eintreibvorgang des Spreizdorns, insbesondere des Spreizbereichs des Spreizdorns in die Spreizhülse des Dübelkörpers, den zwischen den beiden Teilen entstehenden Eintreibwiderstand möglichst gering zu halten. Der Spreizbereich weist vorzugsweise eine Konizität von 1 ° bis 3° auf.

Vorzugsweise weist das Kopfelement eine kegelstumpfförmige Aussenkontur auf, die sich in Setzrichtung verjüngt, um ein problemloses Einführen des Spreizdorns in den Dübelkörper zu gewährleisten und gleichzeitig eine Fixierung des Spreizdornes im Dübelkörper im vormontierten Zustand gewährleistet.

Vorteilhafterweise ist der Dübelkörper aus einem Kunststoff hergestellt, um einerseits eine Wärmebrücke zu verhindern und andererseits eine wirtschaftliche Herstellung desselben sicherzustellen.

Vorzugsweise ist der Spreizdorn aus einem nichtmetallischen Material hergestellt, um ein allfälliges Korrodieren des Spreizdorns zu vermeiden.

Vorteilhafterweise ist der Spreizdorn einteilig ausgebildet, um eine hohe Knicksteifigkeit des Dübelkörpers und des Spreizdorns sicherzustellen.

Vorzugsweise weist der Spreizdorn am Spreizbereich mindestens zwei, als Führungselemente ausgebildete Hakenelemente auf. Insbesondere bei einer geringen Dämmplattenstärke ist die Länge des Hohlschafts derart kurz, dass der Spreizdorn beim Einführen in den Dübelkörper bereits in die Spreizhülse des Dübelkörpers eingedrungen ist, bevor der Spreizdorn durch die Stege am Führungsbereich des Spreizdorns im Hohlschaft des Dübelkörpers geführt wird. Mit den als Führungselemente ausgebildeten Hakenelementen wird der Spreizdorn bereits zu Beginn des Setzvorgangs im Dübelkörper und insbesondere im Hohlschaft des Dübelkörpers geführt.

Vorteilhafterweise sind die als Führungselemente ausgebildeten Hakenelemente im Bereich des setzrichtungsseitigen Endes des Spreizbereichs des Spreizdorns angeordnet. Dadurch ist die Führung des Spreizdorns bei Beginn des Setzvorgangs gewährleistet.

Vorzugsweise weist der Dübelkörper, insbesondere der Hohlschaft, in einem Führungsbereich des Dübelkörpers in Längsrichtung verlaufende Führungsnuten auf. Dadurch werden die am Spreizdorn angeordneten, als Führungselemente ausgebildeten Hakenelemente beim Einführen des Spreizdorns in den Dübelkörper, insbesondere in den Hohlschaft des Dübelkörpers, in einer bevorzugten Art und Weise geführt.

Vorteilhafterweise ist die Innenkontur des Hohlschafts in einem quer zur Längsrichtung verlaufenden Querschnitt sternförmig ausgebildet, wobei die Spitzen der Sternstrahlen die Basis der Führungsnuten bilden. Es kann sich dabei um einen n-strahligen Querschnitt handeln, wobei jeder Sternstrahl als Führungsnut für ein als Führungselement ausgebildetes Hakenelement dienen kann.

Die als Führungselemente ausgebildeten Hakenelemente sind vorzugsweise jeweils auf einer Radialebene angeordnet, welche die Spreizdornachse und das oder die entsprechenden, als Führungselemente ausgebildeten Hakenelemente mittig durchläuft. Diese Radialebene oder -ebenen sind gegenüber einer benachbarten Radialebene, welche die Dübelkörperachse und die Basis der korrespondierenden Führungsnut oder -nuten des sternförmigen Querschnitts des Hohlschafts mittig durchläuft, um einen Winkel versetzt. Dieser Winkel beträgt optional 5° bis 15°. In einer bevorzugten Ausführungsform des Dübelkörpers ist der Querschnitt des Spreizbereichs kleiner als der Querschnitt des Hohlschafts ausgebildet. Durch die versetzte Anordnung der als Führungselemente ausgebildeten Hakenelemente ist die Führung beim Setzen des Spreizdorns auch im Bereich des Hohlschafts gewährleistet, bevor die Stege des Führungsbereichs im Hohlschaft eingreifen.

Vorteilhafterweise ist zumindest ein als Führungselement ausgebildetes Hakenelement linkssperrend in der entsprechenden Führungsnut und zumindest ein als Führungselement ausgebildetes Hakenelement rechtssperrend in der entsprechenden Führungsnut des Dübelkörpers, insbesondere des Hohlschafts des Dübelkörpers, einbringbar. Anders ausgedrückt, liegt zumindest ein als Führungselement ausgebildetes Hakenelement an der linken, beziehungsweise an der gegen den Uhrzeigersinn liegenden Fläche der entsprechenden Führungsnut an und das andere als Führungselement ausgebildete Hakenelement liegt an der rechten, beziehungsweise an der in Uhrzeigersinn liegenden Fläche dieser entsprechenden Führungsnut an. Somit ist der Spreizdorn beim Setzen im Bereich des Hohlschafts des Dübelkörpers in beide Richtungen um die Dübelkörperachse verdrehsicher geführt.

Die Erfindung wird nachstehend anhand eines Ausführungsbeispieles näher erläutert. Es zeigen:
- Fig. 1: Eine Seitenansicht des erfindungsgemässen Befestigungselements im ungespreizten Zustand;
- Fig. 2: das in Fig. 1 dargestellte Befestigungselement im Längsschnitt dargestellt;
- Fig. 3: das in Fig. 1 dargestellte Befestigungselement im Längsschnitt dargestellt, in verspreiztem Zustand;
- Fig. 4: das in Fig. 3 dargestellte Befestigungselement im Querschnitt IV-IV;
- Fig. 5: eine Variante des in Fig. 1 dargestellten Befestigungselements im Längsschnitt dargestellt; und
- Fig. 6: das in Fig. 5 dargestellte Befestigungselement im Querschnitt VI-VI.

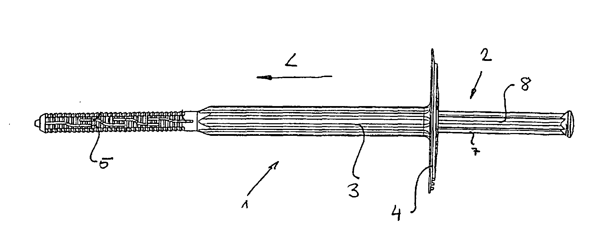

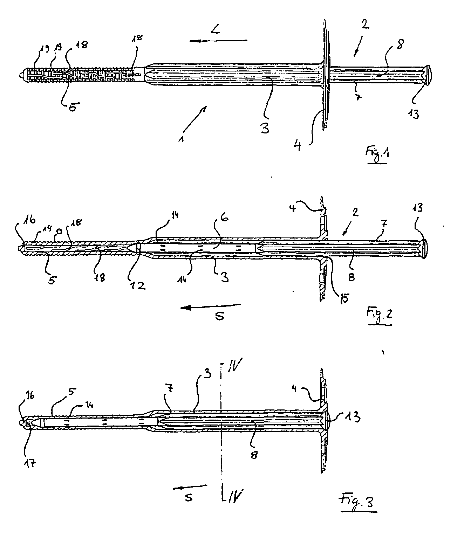

In den Fig.1 bis 4 ist ein erfindungsgemässes Befestigungselement mit einem, durch einen Spreizdorn 2 in einem nicht dargestellten Untergrund verspreizbaren Dübelkörper 1, der einen Hohlschaft 3 aufweist, an dessen einem Längsende eine Druckplatte 4 und am gegenüberliegenden Längsende eine Spreizhülse 5 vorgesehen ist. Der einteilig ausgebildete Spreizdorn 2 weist einen Spreizbereich 6 zum gleichmässig radialen Aufweiten der Spreizhülse 5 und einen, mit dem Hohlschaft 3 zusammenwirkenden, mit in Längsrichtung L verlaufenden Stegen 7 versehenen, Führungsbereich 8 auf, wobei die Stege 7 gleichmässig über dessen Umfang verteilt angeordnet sind.

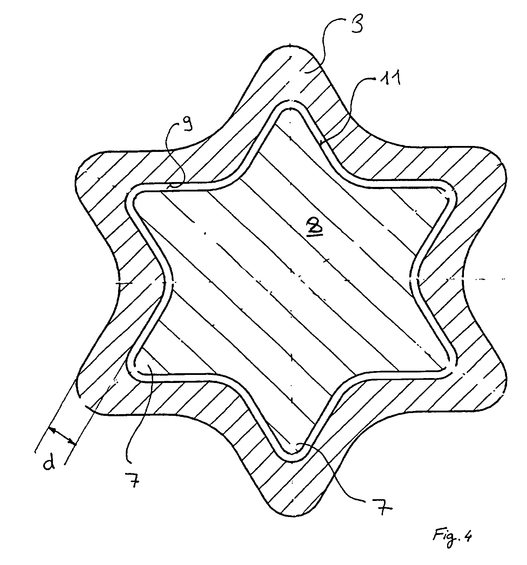

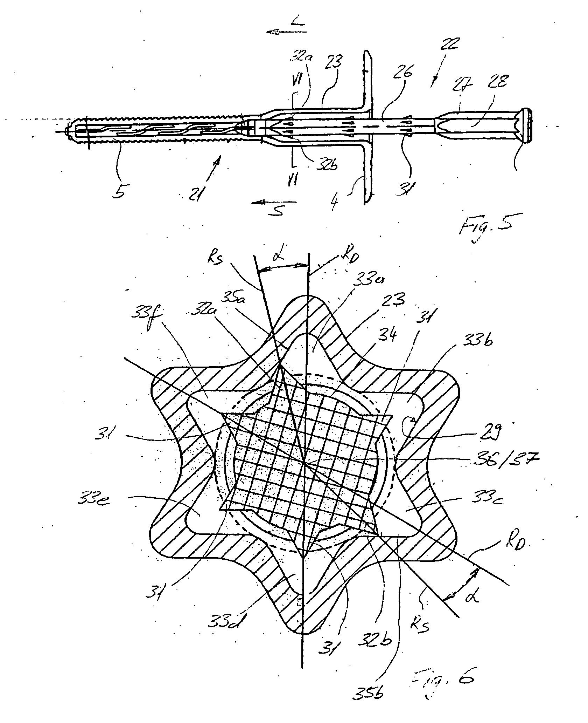

Der im Querschnitt sternförmig ausgebildete Hohlschaft 3 weist eine komplementär zur Aussenkontur 11 des Führungsbereiches 8 ausgebildete Innenkontur 9 auf, wie dies insbesondere aus Fig. 4 ersichtlich ist. Die Wandstärke d des Hohlschafts 3 ist, im quer zur Längsrichtung L verlaufenden Querschnitt, etwa gleichbleibend ausgebildet. Ferner weist der Hohlschaft 3 einen grösseren Aussendurchmesser auf, als die Spreizhülse 5. Um eine Vorfixierung im Untergrund zu gewährleisten, weist die Spreizhülse an ihrer Aussenkontur angeordnete, sich in Umfangrichtung erstreckende Halterippen 19 auf.

Der Spreizdorn 2 weist an einem Ende ein sich in Setzrichtung verjüngendes, kegelstumpfförmiges Kopfelement 12 und am gegenüberliegenden Ende ein, als Anschlag dienendes Kragenelement 13 auf. Im konisch ausgebildeten Spreizbereich 6 ist der Spreizdorn 2 mit mehreren, entgegen der Setzrichtung S wirkenden, Hakenelementen 14 versehen, die im verspreizten Zustand, der insbesondere in Fig. 3 dargestellt ist, sich in die Innenkontur der Spreizhülse 5 des Dübelkörpers 1 einprägen und somit im verspreizten Zustand eine Bewegung entgegen der Setzrichtung S zwischen Dübelkörper 1 und Spreizdorn 2 verhindern. Ferner ist der konische Spreizbereich 6 an der mit dem Dübelkörper 1 in Kontakt bringbaren Aussenkontur im wesentlichen glatt ausgebildet, um niedrige Reibungskräfte zwischen Dübelkörper 1 und Spreizdorn 2 sicherzustellen.

Die Druckplatte 4 ist im wesentlichen als plattenförmiger Kreisring ausgebildet, der koaxial zum Hohlschaft 3 angeordnet ist. Die durch den Kreisring gebildete Durchgangsbohrung weist etwa den Durchmesser des Spreizdorns 2 auf. Entgegen der Setzrichtung S weist die Druckplatte 4 eine koaxial und zur Durchgangsbohrung hin offen und konisch ausgebildete Ausnehmung 15 auf.

Die Spreizhülse 5 weist am setzrichtungsseitigen Ende ein geschlossenes Bodenteil 16 auf, das im wesentlichen eine konusförmige Aussenkontur aufweist. Da die Länge des Spreizbereiches 6 des Spreizdorns 2 kürzer ausgebildet ist als die Länge der Spreizhülse 5 des Dübelkörpers 1, bildet sich im gesetzten Zustand des Befestigungselementes ein Aufnahmeraum 17 für Bohrklein. Ferner weist die Spreizhülse 5 mehrere, stufenförmig ausgebildete, Längsschlitze 18 auf.

In den Fig. 5 und 6 ist eine Variante des in Fig. 1 dargestellten Befestigungselements dargestellt. Der Dübelkörper 21 entspricht im Wesentlichen dem in den Fig. 1 bis 4 beschriebenen Dübelkörper 1. Der Dübelkörper 21 weist einen Hohlschaft 23 auf, an dessen einem Längsende eine Druckplatte 4 und am gegenüberliegenden Längsende eine Spreizhülse 5 vorgesehen ist. Der Spreizdorn 22 weist, wie der in den Fig. 1 bis 4 beschriebene Spreizdorn 2, einen Spreizbereich 26 und einen, mit in Längsrichtung L versehenen Stegen 27 Führungsbereich 28 auf, wobei die Stege 27 vorzugsweise gleichmässig über dessen Umfang verteilt angeordnet sind.

Der Hohlschaft 23 ist im Querschnitt sternförmig ausgebildet und weist eine komplementär zur Aussenkontur des Führungsbereichs 28 ausgebildete Innenkontur 29 auf. In diesem Ausführungsbeispiel hat der sternförmige Querschnitt des Hohlschafts 23 eine sechsstrahlige Ausbildung, wobei jede der jeweils einen Spitzen der Sternstrahlen eine Basis der Führungsnuten 33a-f bildet.

Der Spreizdorn 22 ist im konisch ausgebildeten Spreizbereich 26 mit mehreren, entgegen der Setzrichtung S wirkenden, Hakenelementen 31 versehen. Im setzungsseitigen Spreizbereich 26 sind zwei, leicht versetzt gegenüber angeordnete, als Führungselement ausgebildete Hakenelemente 32a und 32b vorgesehen, welche den Spreizdorn 22 bereits zu Beginn des Setzvorgangs gegenüber dem Dübelkörper 21 in Setzrichtung S führen, sobald der vordere Bereich des Spreizdorns 22 in den Dübelkörper 21 eingeführt ist. Die als Führungselemente ausgebildeten Hakenelemente 32a und 32b können in einer Variante zur beschriebenen Ausführungsform auch in zwei benachbarten Führungsnuten, z. B. 33a und 33b, in Eingriff bringbar sein.

Die als Führungselemente ausgebildeten Hakenelemente 32a und 32b stehen radial weiter als die Hakenelemente 31 bezogen auf den Aussendurchmesser 34 des Spreizbereichs 26 des Spreizdorns 22 vor. Dies derart, dass der Spreizdorn 22 trotz des Vorstands der als Führungselemente ausgebildeten Hakenelemente 32a und 32b in die Spreizhülse 5 des Dübelkörpers 1 einführbar ist sowie eine Führung entlang der Innenkontur 29 des Hohlschafts 23 beim Einführen des Spreizdorns 22 in den Dübelkörper 21 gegeben ist.

In der Fig. 6 ist die versetzte Anordnung der als Führungselemente ausgebildeten Hakenelemente 32a und 32 b gegenüber einer um den Umfang des Spreizbereichs 26 ausgeführten Anordnung der weiteren Hakenelemente 31 dargestellt. Die als Führungselemente ausgebildeten Hakenelemente 32a und 32b füllen den zur Verfügung stehenden Raum der Führungsnuten 33a und 33c nicht vollständig aus. Damit die Führung des Spreizdorns 22 durch die als Führungselemente ausgebildeten Hakenelemente 32a und 32 b gewährleistet ist, liegt zumindest die Spitze des einen als Führungselement ausgebildeten Hakenelements 32a an einer Seitenwand 35a der Führungsnut 33a an und zumindest die Spitze des anderen als Führungselement ausgebildeten Hakenelements 32b liegt an der Seitenwand 35b der Führungsnut 33c an. Zwischen den Spitzen der als Führungselemente ausgebildeten Hakenelementen 32a und 32b sowie den Seitenwänden 35a und 35b ist vorzugsweise ein gewisses Spiel gegeben, damit sich der Spreizdorn 22 beim Setzen nicht mit dem Dübelkörper 21 verklemmt.

Die als Führungselemente ausgebildeten Hakenelemente 32a und 32b sind auf einer Radialebene R_{S} angeordnet, welche die Spreizdornachse 36 und das als Führungselement ausgebildete Hakenelement 32a bzw. 32b mittig durchdringt. Die genannte Radialebene R_{S} ist gegenüber einer Radialebene R_{D}, welche die Dübelkörperachse 37 und die Basis der entsprechenden Führungsnut 33a bzw. 33c mittig durchläuft, um einen Winkel α versetzt. Die Grösse des Winkels α ist in erster Linie von den Grössenverhältnissen des Spreizdorns 22 zur Innenkontur 29 des Hohlschafts 23 abhängig, liegt jedoch in den meisten Ausführungen des Befestigungselements im Bereich von 5° bis 15°. In einer Variante dazu ist es denkbar, dass die als Führungselement ausgebildeten Hakenelemente 32a und 32b auf Radialebenen R_{S} liegen, welche gegenüber der ihnen entsprechenden Radialebenen R_{D} unterschiedliche Winkel aufweisen.

Der Spreizdorn 22 ist durch die versetzt angeordneten, als Führungselemente ausgebildeten Hakenelemente 32a und 32b in den entsprechenden Führungsnuten 33a und 33c geführt, wobei das eine als Führungselement ausgebildete Hakenelement 32a linkssperrend und das andere als Führungselement ausgebildete Hakenelement 32b rechtssperrend wirkt, wenn der Spreizdorn 22 in den Dübelkörper 21 eingesetzt wird. Bezogen auf die Fig. 6 kann linkssperrend als gegen den Uhrzeigersinn und rechtssperrend im Uhrzeigersinn wirkend gegenüber einer Drehbewegung um die Spreizdornachse 36 verstanden werden. Sobald der Spreizbereich 26 des Spreizdorns 22 genügend weit in die Spreizhülse 5 des Dübelkörpers 21 eingedrungen ist, greift der Führungsbereich 28 des Spreizdorns 22 in den Hohlschaft 23 ein und füllt diesen im Wesentlichen vollständig aus. Durch die präzise Führung der als Führungselemente ausgebildeten Hakenelemente 32a und 32b ist das Einführen des Führungsbereichs 28 in den Hohlschaft 23 ohne eine anpassende Drehung des Spreizdorns 22 um die Spreizdornachse 36 gewährleistet.

## Patentansprüche

1. Befestigungselement zur Befestigung von Dämmstoffplatten an einem Untergrund mit einem, durch einen Spreizdorn (2) im Untergrund verspreizbaren, Dübelkörper (1), der einen Hohlschaft (3) aufweist, an dessen einem Längsende eine Druckplatte (4) und am gegenüberliegenden Längsende eine Spreizhülse (5) vorgesehen ist, wobei der Spreizdorn (2) einen Spreizbereich (6) zum radialen Aufweiten der Spreizhülse (5) und einen, mit dem Hohlschaft (3) zusammenwirkenden, zumindest teilweise mit in Längsrichtung (L) verlaufenden Stegen (7) versehenen, Führungsbereich (8) aufweist, wobei die Innenkontur des Hohlschafts (3) zumindest teilweise komplementär zur Aussenkontur des Führungsbereiches (8) ausgebildet ist, **dadurch gekennzeichnet, dass** der Spreizbereich (6) am setzrichtungsseitigen Ende ein Kopfelement (12) aufweist, das den unmittelbar an dieses angrenzenden Bereich des übrigen Spreizbereichs (6) radial zumindest teilweise überragt.

2. Befestigungselement nach Anspruch 1, **dadurch gekennzeichnet, dass** der Hohlschaft (3) in einem quer zur Längsrichtung (L) verlaufenden Querschnitt eine etwa gleichbleibende Wandstärke (d) aufweist.

3. Befestigungselement nach Anspruch 1 oder 2, **dadurch gekennzeichnet, dass** der Hohlschaft (3) in einem quer zur Längsrichtung (L) verlaufenden Querschnitt sternförmig ausgebildet ist.

4. Befestigungselement nach einem der Ansprüche 1 bis 3, **dadurch gekennzeichnet, dass** die Länge der Spreizhülse (5) grösser als die Länge des Spreizbereichs (6) ist.

5. Befestigungselement nach einem der Ansprüche 1 bis 4, **dadurch gekennzeichnet, dass** das setzrichtungsseitige Ende der Spreizhülse (5) ein geschlossenes Bodenteil (16) aufweist.

6. Befestigungselement nach einem der Ansprüche 1 bis 5, **dadurch gekennzeichnet, dass** der Spreizbereich (6) zumindest über einen Teil seiner Länge konisch ausgebildet ist, wobei der Durchmesser des Spreizbereichs (6) im konischen Bereich in Setzrichtung (S) zunimmt.

7. Befestigungselement nach Anspruch 1, **dadurch gekennzeichnet, dass** das Kopfelement (12) eine kegelstumpfförmige Aussenkontur aufweist, die sich in Setzrichtung (S) verjüngt.

8. Befestigungselement nach einem der Ansprüche 1 bis 7, **dadurch gekennzeichnet, dass** der Spreizdorn (2) aus einem nichtmetallischen Material hergestellt ist.

9. Befestigungselement nach Anspruch 1, **dadurch gekennzeichnet, dass** der Spreizdorn (22) am Spreizbereich (26) mindestens zwei, als Führungselemente ausgebildete Hakenelemente (32a, 32b) aufweist, zur Führung des Spreizdorns (22) im Dübelkörper (21), insbesondere zur Führung des Spreizdorns (22) im Hohlschaft (23) des Dübelkörpers (21).

10. Befestigungselement nach Anspruch 9, **dadurch gekennzeichnet, dass** die als Führungselemente ausgebildeten Hakenelemente (32a, 32b) im setzrichtungsseitigen Endbereich des Spreizbereichs (26) des Spreizdorns (22) angeordnet sind.

11. Befestigungselement nach Anspruch 9 oder 10, **dadurch gekennzeichnet, dass** der Dübelkörper (21), insbesondere der Hohlschaft (23), in einem Führungsbereich des Dübelkörpers (21) in Längsrichtung (L) verlaufende, zur Führung der als Führungselemente ausgebildeten Hakenelemente (32a, 32b) Führungsnuten (33a-f) aufweist.

12. Befestigungselement nach Anspruch 9 oder 10, **dadurch gekennzeichnet, dass** der Hohlschaft (23) in einem quer zur Längsrichtung verlaufenden Querschnitt sternförmig ausgebildet ist, wobei die Spitzen der Sternstrahlen die Basis der Führungsnuten (33a-f) bilden.

13. Befestigungselement nach Anspruch 12, **dadurch gekennzeichnet, dass** ein oder mehrere als Führungselemente ausgebildete Hakenelemente (32a, 32b) jeweils auf einer Radialebene (R_{S}) angeordnet sind, welche die Spreizdornachse (36) und das oder die entsprechenden, als Führungselemente ausgebildeten Hakenelemente (32a, 32b) mittig durchläuft, wobei die Radialebene (R_{S}) gegenüber einer Radialebene (R_{D}), welche die Dübelkörperachse (37) und die Basis einer korrespondierenden Führungsnut (33a, 33c) des sternförmigen Querschnitts des Hohlschafts (23) mittig durchläuft, um einen Winkel (α), optional um einen Winkel (α) von 5° bis 15°, versetzt ist.

14. Befestigungselement nach einem der Ansprüche 9 bis 12, **dadurch gekennzeichnet, dass** zumindest ein als Führungselement ausgebildetes Hakenelement (32a) linkssperrend in einer Führungsnut (33a) und zumindest ein als Führungselement ausgebildetes Hakenelement (32b) rechtssperrend in eine Führungsnut (33c) des Dübelkörpers (21), insbesondere des Hohlschafts (23) des Dübelkörpers (21), einbringbar ist.

## Claims

1. Attachment means for attaching insulating plates to a base with a peg body (1) having a wooden shaft (3) on one end of which there is a pressure plate (4) and on the other opposite end of which there is a spreading shell casing (5), whereby the extending peg (2) has a guide area (8) with a bar (7) that at least partially runs in the lengthways direction (L) and functions in conjunction with the hollow shaft (3), whereby the inner form of the hollow shaft (3) is at least partially complementary to the outer form of the guide area (8),
**characterized in that**
the extending range (6) has a head element (12) that at least partially projects, radially, beyond a remainder of the extending range (6) bordering on a head element (12) concerned.

2. Attachment means in accordance with claim 1,
**characterized in that**
the hollow shaft (3) has, as a cross-section running transversely in relation to the longitudinal direction (L), an approximately constant thickness (d).

3. Attachment means in accordance with claims 1 or 2,
**characterized in that**
the hollow shaft (3) has, in a cross-section running transversely in relation to the lengthwise direction (L), the form of a star.

4. Attachment means in accordance with claims 1 or 3,
**characterized in that**
the spreading shell case (5) is longer than the extending range (6).

5. Attachment means in accordance with one of claims 1 to 4,
**characterized in that**
the front end of the spreading shell case (5) has a closed base section (16).

6. Attachment means in accordance with one of claims 1 to 5,
**characterized in that**
the spreading area (6) is, at least over part of its length, conical, whereby the diameter of the spreading area (6) increases, in the conical area, as seen in the direction of placement (S).

7. Attachment means in accordance with claim 1,
**characterized in that**
the head element (12) has, on the outside, the shape of a truncated cone that tapers in the direction of placing (S).

8. Attachment means in accordance with one of claims 1 to 7,
**characterized in that**
the extending peg (2) is made of non-metallic material.

9. Attachment means in accordance with one of claims 1,
**characterized in that**
the extending peg (22) has at least two hook elements (32a, 32b), developed as guiding elements, on the extending range (26), for guiding the extending peg (22) in the peg body (21), particularly for guiding the extending peg (22) in the hollow shaft (23) of the peg body (21).

10. Attachment means in accordance with claim 9,
**characterized in that**
the hook elements (32a, 32b) formed as guiding elements are disposed in the insertion-side end area of the extending range (26) of the extending peg (22).

11. Attachment means in accordance with claims 9 or 10,
**characterized in that**
the peg body (21), particularly the hollow shaft (23), has, in a guide area of the peg body (21), and running in the lengthwise direction (L), guiding grooves (33a-f), for guiding the hook elements (32a, 32b) developed as guide elements.

12. Attachment means in accordance with claims 9 or 10,
**characterized in that**
the hollow shaft (23) is star-shaped as seen in a cross-section running transversely in relation to the lengthways direction, whereby the fingers of the star form the basis of the guide grooves (33a-f).

13. Attachment means in accordance with claim 12,
**characterized in that**
one or more hook elements (32a, 32b) developed as guiding elements are in each case disposed on a radial plane (R_{S}) that passes through the centre of the extending peg axis (36) and the centre of the corresponding hook elements (32a, 32b) developed as guiding elements, whereby the radial plane (R_{S}) is, in relation to a radial plane (R_{D}) that passes through the centre of the extending peg axis (37) and the base of a corresponding guiding groove (33a, 33c) of the star-shaped cross-section of the hollow shaft (23), optionally shifted through an angle (α) of 5° to 15°.

14. Attachment means in accordance with one of claims 9 to 12,
**characterized in that**
at least one hook element (32a) developed as a guiding element can be inserted, such that it blocks leftward movement, into a guide groove (33a) and **in that** at least one hook element (32b), developed as a guiding element, can be inserted, such that it blocks movement to the right, into a guide groove (33c) of the peg body (21), particularly of the hollow shaft (23) of the peg body (21).

## Revendications

1. Élément de fixation pour la fixation de panneaux de matériau isolant à un support, avec un corps de cheville (1) qui peut être expansé dans le support par l'intermédiaire d'une broche d'expansion (2) et qui comporte une tige creuse (3) à l'une des extrémités longitudinales de laquelle est prévue une plaque de pression (4) et à l'extrémité longitudinale opposée de laquelle est prévu un manchon expansible (5), la broche d'expansion (2) comportant une zone d'expansion (6) pour le déploiement radial du manchon expansible (5) et une zone de guidage (8) qui coopère avec la tige creuse (3) et est pourvue au moins partiellement de nervures (7) s'étendant dans la direction longitudinale (L), le contour intérieur de la tige creuse (3) présentant une conformation au moins partiellement complémentaire au contour extérieur de la zone de guidage (8), **caractérisé en ce que** la zone d'expansion (6) à l'extrémité côté direction de scellement comporte un élément de tête (12) qui, dans le sens radial, dépasse au moins partiellement de la région de la zone d'expansion restante (6) qui lui est directement adjacente.

2. Élément de fixation selon la revendication 1, **caractérisé en ce que** la tige creuse (3) présente, en coupe transversale prise perpendiculairement à la direction longitudinale (L), une épaisseur de paroi (d) sensiblement constante.

3. Élément de fixation selon la revendication 1 ou 2, **caractérisé en ce que** la tige creuse (3) présente, en coupe transversale prise perpendiculairement à la direction longitudinale (L), une forme en étoile.

4. Élément de fixation selon une des revendications 1 à 3, **caractérisé en ce que** la longueur du manchon expansible (5) est supérieure à la longueur de la zone d'expansion (6).

5. Élément de fixation selon une des revendications 1 à 4, **caractérisé en ce que** l'extrémité, côté direction de scellement, du manchon expansible (5) présente une partie de fond fermée (16).

6. Élément de fixation selon une des revendications 1 à 5, **caractérisé en ce que** la zone d'expansion (6) présente une forme conique au moins sur une partie de sa longueur, le diamètre de la zone d'expansion (6) dans la zone conique augmentant dans la direction de scellement (S).

7. Élément de fixation selon la revendication 1, **caractérisé en ce que** l'élément de tête (12) présente un contour extérieur tronconique qui se rétrécit dans la direction de scellement (S).

8. Élément de fixation selon une des revendications 1 à 7, **caractérisé en ce que** la broche d'expansion (2) est réalisée en matériau non métallique.

9. Élément de fixation selon la revendication 1, **caractérisé en ce que** la broche d'expansion (22) comporte, dans la zone d'expansion (26), au moins deux éléments en crochets (32a, 32b) conformés en éléments de guidage pour le guidage de la broche d'expansion (22) dans le corps de cheville (21), en particulier pour le guidage de la broche d'expansion (22) dans la tige creuse (23) du corps de cheville (21).

10. Élément de fixation selon la revendication 9, **caractérisé en ce que** les éléments en crochets (32a, 32b) conformés en éléments de guidage sont disposés dans la zone d'extrémité, côté direction de scellement, de la zone d'expansion (26) de la broche d'expansion (22).

11. Élément de fixation selon la revendication 9 ou 10, **caractérisé en ce que** le corps de cheville (21), en particulier la tige creuse (23), comporte, dans une zone de guidage du corps de cheville (21), des rainures de guidage (33a-f) s'étendant dans la direction longitudinale (L) pour le guidage des éléments en crochets (32a, 32b) conformés en éléments de guidage.

12. Élément de fixation selon la revendication 9 ou 10, **caractérisé en ce que** la tige creuse (23) présente, en coupe transversale prise perpendiculairement à la direction longitudinale, une forme en étoile, les pointes des branches de l'étoile formant la base des rainures de guidage (33a-f).

13. Élément de fixation selon la revendication 12, **caractérisé en ce qu'**un ou plusieurs éléments en crochets (32a, 32b) conformés en éléments de guidage sont respectivement disposés sur un plan radial (R_{S}) qui coupe en leur centre l'axe (36) de la broche d'expansion et le ou les éléments en crochets correspondants (32a, 32b) conformés en éléments de guidage, le plan radial (R_{S}) étant décalé d'un angle (α), optionnellement d'un angle (α) de 5° à 15°, par rapport à un plan radial (R_{D}) qui traverse en leur centre l'axe (37) du corps de cheville et la base d'une rainure de guidage correspondante (33a, 33c) du profil de section transversale en étoile de la tige creuse (23).

14. Élément de fixation selon une des revendications 9 à 12, **caractérisé en ce qu'**au moins un élément en crochet (32a) conformé en élément de guidage peut être introduit avec blocage à gauche dans une rainure de guidage (33a) et au moins un élément en crochet (32b) conformé en élément de guidage peut être introduit avec blocage à droite dans une rainure de guidage (33c) du corps de cheville (21), en particulier de la tige creuse (23) du corps de cheville (21).
